# EUROPEAN PATENT APPLICATION

(11) **EP 4 265 703 A1**
(43) Date of publication of application: **25.10.2023**
(21) Application number: 21911400.6
(22) Date of filing: 16.12.2021
(51) Int. Cl.: C09J 175/04, B32B 37/12, B32B 15/01

(54) **ADHESIVE COATING COMPOSITION FOR ELECTRICAL STEEL SHEET, ELECTRICAL STEEL SHEET LAMINATE, AND MANUFACTURING METHOD THEREFOR**

(30) Priority: 21.12.2020 KR 20200180180
(71) Applicant: POSCO Co., Ltd, Pohang-si, Gyeongsangbuk-do 37859 (KR)
(72) Inventor: HA, Bongwoo, Pohang-si, Gyeongsangbuk-do 37859 (KR); KIM, Jungwoo, Pohang-si, Gyeongsangbuk-do 37859 (KR); LEE, Donggyu, Pohang-si, Gyeongsangbuk-do 37859 (KR); KO, Eunjung, Pohang-si, Gyeongsangbuk-do 37859 (KR); NO, Taeyoung, Pohang-si, Gyeongsangbuk-do 37859 (KR); PARK, Gyeongryeol, Pohang-si, Gyeongsangbuk-do 37859 (KR)
(74) Representative: Meissner Bolte Partnerschaft mbB
(86) International application number: PCT/KR2021/019213
(87) International publication number: WO 2022/139333

(57) **Abstract**

The present disclosure relates to a bonding composition for an electrical steel sheet, and a steel sheet and a laminate to which same is applied, the bonding composition comprising polyurethane formed by reacting a diisocyanate monomer and a polyol, wherein the diisocyanate monomer can comprise an aromatic diisocyanate monomer and an aliphatic diisocyanate monomer.

## Description

### [Technical Field]

One implementation of the present disclosure relates to an adhesive coating composition for an electrical steel sheet, an electrical steel sheet laminate, and a manufacturing method thereof. Specifically, one implementation of the present disclosure relates to an adhesive coating composition for an electrical steel sheet including a urethane resin, an electrical steel sheet laminate, and a manufacturing method thereof.

### [Background Art]

A non-oriented electrical steel sheet is a steel sheet with uniform magnetic properties in all directions on a rolled sheet, and has been widely used in motors, generator cores, electric motors, and small transformers.

The electrical steel sheet may be classified into two types of performing stress relief annealing (SRA) to improve magnetic properties after blanking and omitting SRA when the cost loss according to heat treatment is greater than the magnetic property effect by SRA.

An insulating film is a film coated in a final manufacturing process of a laminate of a motor, iron core of a generator, an electric motor, and a small transformer, and generally requires an electrical property for suppressing the occurrence of eddy current. In addition, continuous blanking workability, adhesion resistance, and surface adhesion are required. The continuous blanking workability refers to the ability of suppressing wear of a mold when forming an iron core by laminating a plurality of layers after blanking in a predetermined shape. The adhesion resistance refers to the ability of iron core steel sheets not to adhere to each other after a stress relief annealing process in which the magnetic properties are restored by removing the processing stress of the steel sheet.

In addition to these basic properties, excellent coating workability of a coating solution, solution stability that can be used for a long time after mixing, and the like are also required. Such an insulating film can be manufactured as an electrical steel laminate only when a separate fastening method such as welding, clamping, or interlocking is used.

### [Disclosure]

### [Technical Problem]

The present disclosure attempts to provide an electrical steel sheet laminate having a fusion layer capable of bonding (fastening) an electrical steel sheet without using conventional fastening methods such as welding, clamping, and interlocking, and a manufacturing method thereof. Specifically, the present disclosure attempts to provide an adhesive coating composition for an electrical steel sheet capable of improving adhesion between electrical steel sheets by controlling components of a fusion layer formed between the electrical steel sheets.

### [Technical Solution]

One implementation of the present invention provides a bonding composition for an electrical steel sheet including an adhesive resin and a bonding additive, wherein the adhesive resin is polyurethane formed by reacting a diisocyanate monomer and a polyol, and the diisocyanate monomer includes an aromatic diisocyanate monomer and an aliphatic diisocyanate monomer.

The diisocyanate monomer includes 50 parts by weight or less of the aliphatic diisocyanate monomer based on 100 parts by weight of the total diisocyanate monomer.

The aromatic diisocyanate monomer is a monomer represented by the following Chemical Formula 1, Chemical Formula 2, or a combination thereof.

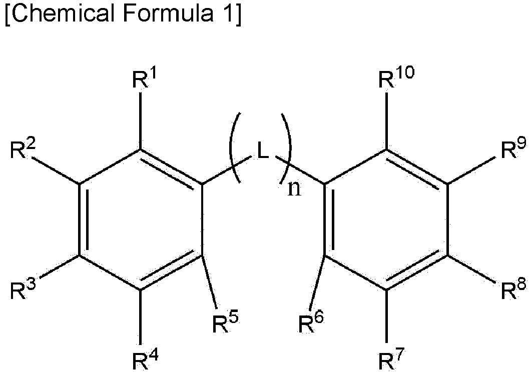

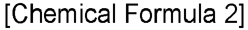

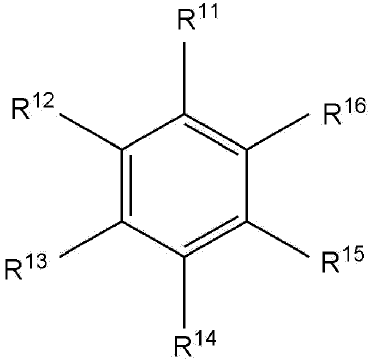

In Chemical Formula 1 above,
R' to R¹⁰ are each independently hydrogen, heavy hydrogen, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is isocyanate, and any one of R⁶ to R¹⁰ is isocyanate,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group,
n is any one integer of 1 to 10, and,
in Chemical Formula 2 above,
R¹¹ to R¹⁶ are each independently hydrogen, heavy hydrogen, a substituted or unsubstituted C1 to C10 alkyl group, a substituted or unsubstituted C6 to C20 aryl group, a substituted or unsubstituted C5 to C20 heteroaryl group, or a substituted or unsubstituted C1 to C10 alkyl isocyanate group, and,
at least two of R¹¹ to R¹⁶ are isocyanates or substituted or unsubstituted C1 to C10 alkyl isocyanates.

The aliphatic diisocyanate monomer is a monomer represented by Chemical Formula 3 below.

[Chemical Formula 3] O=C=N-R-N=C=O

In Chemical Formula 3 above,
R is a substituted or unsubstituted C1 to C10 alkyl group or a substituted or unsubstituted C3 to C12 cycloalkyl group.

The aromatic diisocyanate monomer is at least one selected from the group consisting of 2,4-toluene diisocyanate, 2,6-toluene diisocyanate, p-phenylene diisocyanate, 2,2'-methylene diphenyl diisocyanate, 2,4'-methylene diphenyl diisocyanate, 4,4'-methylene diphenyl diisocyanate and m-xylene diisocyanate.

The aliphatic diisocyanate monomer is at least one selected from the group consisting of hexamethylene diisocyanate (HDI), 1,4-cyclohexane diisocyanate, 4,4'-dicyclohexylmethane diisocyanate, isophorone diisocyanate and hydrogenated xylene diisocyanate.

The bonding composition for the electrical steel sheet has a glass transition temperature (Tg) of greater than - 70°C to less than - 10°C, tensile strength of greater than 40 MPa to less than 120 MPa, and elongation of greater than 100% to less than 800%.

Another implementation of the present invention provides an electrical steel sheet including an electrical steel sheet substrate; and a bonding coating layer positioned on the electrical steel sheet substrate, wherein the bonding coating layer includes an adhesive resin and a bonding additive, and the adhesive resin is polyurethane formed by reacting a diisocyanate monomer and a polyol, and the diisocyanate monomer includes an aromatic diisocyanate monomer and an aliphatic diisocyanate monomer.

Yet another implementation of the present invention provides an electrical steel sheet laminate including a plurality of electrical steel sheets; and fusion layers positioned between the plurality of electrical steel sheets, wherein the fusion layer includes an adhesive resin and a bonding additive, the adhesive resin is polyurethane formed by reacting a diisocyanate monomer and a polyol, and the diisocyanate monomer includes an aromatic diisocyanate monomer and an aliphatic diisocyanate monomer.

### [Advantageous Effects]

According to one implementation of the present invention, it is possible to improve the adhesion between electrical steel sheets by controlling components of a fusion layer formed between the electrical steel sheets.

According to one implementation of the present invention, it is possible to bond an electrical steel sheet without using conventional fastening methods such as welding, clamping, and interlocking.

According to one implementation of the present invention, it is possible to provide an adhesive coating composition for an electrical steel sheet having excellent coating film adhesion, peeling property, and ATF resistance.

### [Mode for Invention]

Terms such as first, second and third are used to describe various parts, components, regions, layers and/or sections, but are not limited thereto. These terms are only used to distinguish one part, component, region, layer or section from another part, component, region, layer or section. Accordingly, a first part, component, region, layer or section to be described below may be referred to as a second part, component, region, layer or section without departing from the scope of the present invention.

The terms used herein is for the purpose of describing specific exemplary embodiments only and are not intended to be limiting of the present invention. The singular forms used herein include plural forms as well, if the phrases do not clearly have the opposite meaning. The "comprising" used in the specification means that a specific feature, region, integer, step, operation, element and/or component is embodied and other specific features, regions, integers, steps, operations, elements, components, and/or groups are not excluded.

When a part is referred to as being "above" or "on" the other part, the part may be directly above or on the other part or may be followed by another part therebetween. In contrast, when a part is referred to as being "directly on" the other part, there is no intervening part therebetween.

Unless defined otherwise, all terms including technical and scientific terms used herein have the same meaning as commonly understood by those skilled in the art to which the present invention pertains. Commonly used predefined terms are further interpreted as having a meaning consistent with the relevant technical literature and the present invention, and are not to be construed as ideal or very formal meanings unless defined otherwise.

In the present specification, unless otherwise defined, "substitution" means that at least one hydrogen of a compound is substituted with a C1 to C30 alkyl group; a C1 to C10 alkoxy group; a silane group; an alkylsilane group; an alkoxysilane group; and an ethyleneoxyl group.

In the present specification, "hetero" means an atom selected from the group consisting of N, O, S, and P, unless otherwise defined.

The alkyl group may be a C1 to C20 alkyl group, specifically, a C1 to C6 lower alkyl group, a C7 to C10 intermediate alkyl group, or a C11 to C20 higher alkyl group.

For example, a C1 to C4 alkyl group means that there are 1 to 4 carbon atoms in an alkyl chain, which is selected from the group consisting of methyl, ethyl, propyl, iso-propyl, n-butyl, iso-butyl, sec-butyl and t-butyl.

A typical alkyl group includes methyl, ethyl, propyl, isopropyl, butyl, isobutyl, t-butyl, pentyl, hexyl, cyclopropyl, cyclobutyl, cyclopentyl, cyclohexyl and the like.

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

The present invention is to provide a bonding composition for an electrical steel sheet. In the description of the present invention, an adhesive coating composition is also a term used to indicate the bonding composition. In addition, the bonding composition of the present invention is a composition capable of bonding the surfaces of two or more steel sheets, and its use is not particularly limited, but may be, for example, a self-bonding composition for an electrical steel sheet to provide self-bonding of the electrical steel sheet.

The bonding composition for the electrical steel sheet of one implementation of the present disclosure may include an adhesive resin and a bonding additive, wherein the adhesive resin may be polyurethane formed by reacting a diisocyanate monomer and a polyol, and the diisocyanate monomer may include an aromatic diisocyanate monomer and an aliphatic diisocyanate monomer.

The diisocyanate monomer may include 50 parts by weight or less of the aliphatic diisocyanate monomer based on 100 parts by weight of the total diisocyanate monomer. Specifically, the aliphatic diisocyanate monomer may be included in an amount of greater than 0 to 50 parts by weight or 20 to 40 parts by weight based on 100 parts by weight of the total diisocyanate monomer.

Both the aromatic isocyanate monomer and the aliphatic isocyanate monomer may constitute a hard segment in polyurethane. However, both the monomers have a difference in hardness of the structure due to a difference in molecular structural characteristic. The molecular structure hardness of the aromatic isocyanate monomer is higher than that of the aliphatic isocyanate monomer. Accordingly, when the aromatic isocyanate monomer is included more than the aliphatic isocyanate monomer, the hardness of the hard segment of an obtained polyurethane becomes higher. That is, a bonding composition having high hardness may be obtained.

Accordingly, as the aromatic isocyanate monomer is included more than the aliphatic isocyanate monomer, the tensile strength property of the bonding solution is excellent, but the elongation rate and the peel strength property are deteriorated.

On the other hand, as the aliphatic isocyanate monomer is included more than the aromatic isocyanate monomer, the elongation of the bonding solution is excellent, but the tensile strength property is deteriorated and AFT resistance is also deteriorated.

Therefore, in order to provide a bonding composition having excellent peel strength and AFT resistance, the ratio of the aliphatic isocyanate and aromatic isocyanate monomers should be controlled within the range disclosed in the present invention.

The aromatic diisocyanate monomer may be a monomer represented by Chemical Formula 1, Chemical Formula 2, or a combination thereof.

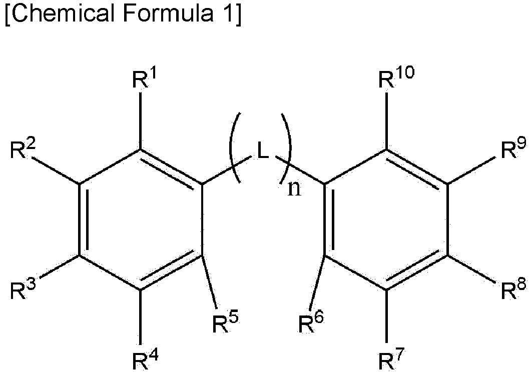

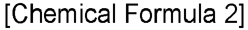

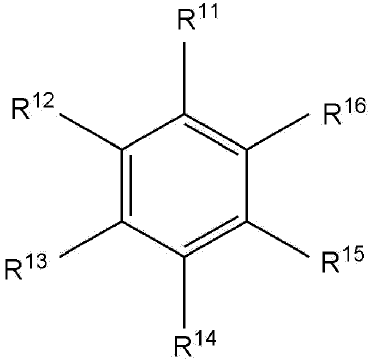

In Chemical Formula 1 above,
R¹ to R¹⁰ are each independently hydrogen, heavy hydrogen, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is isocyanate, and any one of R⁶ to R¹⁰ is isocyanate,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group,
n is any one integer of 1 to 10, and
in Chemical Formula 2 above,
R¹¹ to R¹⁶ are each independently hydrogen, heavy hydrogen, a substituted or unsubstituted C1 to C10 alkyl group, a substituted or unsubstituted C6 to C20 aryl group, a substituted or unsubstituted C5 to C20 heteroaryl group, an isocyanate group, or a substituted or unsubstituted C1 to C10 alkyl isocyanate group, and,
at least two of R¹¹ to R¹⁶ are isocyanates or substituted or unsubstituted C1 to C10 alkyl isocyanates.

The aliphatic diisocyanate monomer may be a monomer represented by Chemical Formula 3 below.

[Chemical Formula 3] O=C=N-R-N=C=O

In Chemical Formula 3, R is a substituted or unsubstituted C1 to C10 alkyl group or a substituted or unsubstituted C3 to C12 cycloalkyl group.

In the monomer represented by Chemical Formula 1, any one of R' to R⁵ is isocyanate, and any one of R⁶ to R¹⁰ is isocyanate, except for a case where R³ and R⁸ are both isocyanates, and except for a case where R¹ and R¹⁰ are both isocyanates.

In the monomer represented by Chemical Formula 1, any one of R' to R⁵ is isocyanate, and any one of R⁶ to R¹⁰ is isocyanate, further except for a case where any one of R¹ to R⁵ and any one of R⁶ to R¹⁰ are both isocyanates symmetrically about L.

Specifically, the monomer represented by Chemical Formula 1 may be represented by Chemical Formula 4 below.

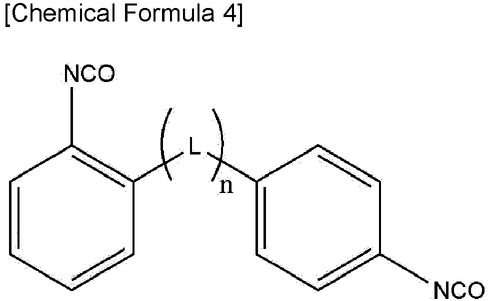

In Chemical Formula 4, L may be a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group.

Specifically, in Chemical Formula 1 or 4, L may be a methylene group.

Specifically, the monomer represented by Chemical Formula 2 may be represented by Chemical Formula 5 below.

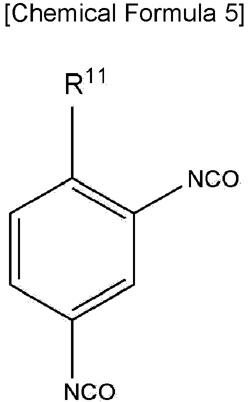

In Chemical Formula 5, R¹¹ may be hydrogen, heavy hydrogen, a substituted or unsubstituted C1 to C10 alkyl group, a substituted or unsubstituted C6 to C20 aryl group, or a substituted or unsubstituted C5 to C20 heteroaryl group.

More specifically, the aromatic diisocyanate monomer represented by Chemical Formula 1, 2, 4, or 5 may be at least one selected from the group consisting of 2,4-toluene diisocyanate, 2,6-toluene diisocyanate, p-phenylene diisocyanate, 2,2'-methylene diphenyl diisocyanate, 2,4'-methylene diphenyl diisocyanate, 4,4'-methylene diphenyl diisocyanate, and m-xylene diisocyanate. The aliphatic diisocyanate monomer represented by Chemical Formula 3 may be at least one selected from the group consisting of hexamethylene diisocyanate (HDI), 1,4-cyclohexane diisocyanate, 4,4'-dicyclohexylmethane diisocyanate, isophorone diisocyanate and hydrogenated xylene diisocyanate.

The polyol may be a polyol of Chemical Formula 6.

[Chemical Formula 6] HO-R'-OH

In Chemical Formula 6, R' may be a substituted or unsubstituted C1 to C10 alkyl group, a substituted or unsubstituted C6 to C20 aryl group, or a substituted or unsubstituted C5 to C20 heteroaryl group.

The polyol may have a number average molecular weight of 400 to 1000 g/mol. In addition, the polyol may be polypropylene glycol).

The bonding composition for the electrical steel sheet may have a glass transition temperature (Tg) of greater than - 70°C to less than - 10°C, tensile strength of greater than 40 MPa to less than 120 MPa, and elongation of greater than 100% to less than 800%. Specifically, the glass transition temperature may be - 60°C to - 20°C or - 50°C to - 30°C, the tensile strength may be 50 MPa to 100 MPa or 60 MPa to 70 MPa, and the elongation may be 300 to 600% or 400 to 500%.

The polyol reacting with the diisocyanate monomer to form the polyurethane may have a number average molecular weight of 400 to 1000 g/mol. In addition, the polyol may be polypropylene glycol).

In the bonding composition for the electrical steel sheet, the content of the polyurethane resin may be 98 wt% or more based on the total weight of the bonding composition for the electrical steel sheet. The bonding composition for the electrical steel sheet according to one implementation of the present disclosure may exhibit excellent adhesion to the steel sheet by minimizing the content of bonding additives other than the resin component included in the composition and maximizing the content of the resin component.

The other bonding additives are not limited as long as they are used in a general bonding composition, but may include, for example, a coupling agent, a wetting agent, a curing agent, a curing catalyst, and the like.

Specifically, the coupling agent may include a silane coupling agent, and more specifically, at least one of a vinyl-based silane coupling agent and a methacryloxy-based silane coupling agent. Examples of the vinyl-based silane coupling agent may include vinyl trimethoxy silane, vinyl triethoxy silane, and the like. The methacryloxy-based silane coupling agent may include 3-methacryloxypropyl methyldimethoxysilane, 3-methacryloxypropyl trimethoxysilane, 3-methacryloxypropyl methyldiethoxysilane, and 3-methacryloxypropyl triethoxysilane.

Specifically, the wetting agent may include a silicone-based wetting agent. An example of a silicone-based wetting additive may be polyether-modified polydimethylsiloxane. The wetting agent may be added to the bonding composition for the electrical steel sheet in order to enhance interfacial adhesion between the electrical steel sheet and the fusion layer.

Specifically, the curing agent may include an aliphatic amine-based, aromatic amine-based, amino amine-based, or imidazole-based curing agent. More specifically, a dicyandiamide-based curing agent may be included. Specifically, the curing catalyst may include an imidazole-based curing catalyst.

The bonding composition for the electrical steel sheet according to one implementation of the present disclosure may further include 0.10 to 1.00 parts by weight of a coupling agent based on 100 parts by weight of the polyurethane resin. Specifically, the bonding composition may further include a coupling agent in an amount of 0.40 to 0.60 parts by weight. If a cross-linking agent is included too little, the effect of enhancing the interfacial adhesion between the electrical steel sheet and the fusion layer may not be sufficiently obtained. If the cross-linking agent is included too much, a precipitate may occur in the adhesive coating composition due to a reaction between the cross-linking agents.

The bonding composition for the electrical steel sheet according to one implementation of the present disclosure may further include 0.50 to 2.50 parts by weight of a curing agent based on 100 parts by weight of the polyurethane resin. Specifically, the bonding composition may further include a curing agent in an amount of 0.90 to 1.10 parts by weight. The curing agent serves to control the reactivity of the surface of the adhesive coating layer. If the curing agent is included too little, the curing reaction of the fusion layer is lowered, and a problem in that the sticky property of the surface of the fusion layer is deteriorated may occur. On the contrary, if the curing agent is added too much, the fastening force after low-temperature fusion may be deteriorated.

The bonding composition for the electrical steel sheet according to one implementation of the present disclosure may further include 0.05 to 0.50 parts by weight of a wetting agent based on 100 parts by weight of the polyurethane resin. Specifically, the bonding composition may further include a wetting agent in an amount of 0.09 to 0.11 parts by weight.

The bonding composition for the electrical steel sheet according to one implementation of the present disclosure may further include 0.10 to 1.00 parts by weight of a curing catalyst based on 100 parts by weight of the polyurethane resin. Specifically, the bonding composition may further include a curing catalyst in an amount of 0.40 to 0.60 parts by weight.

The electrical steel sheet of one implementation of the present disclosure may include an electrical steel sheet substrate; and a bonding coating layer positioned on the electrical steel sheet substrate, wherein the bonding coating layer may include an adhesive resin and a bonding additive, and the adhesive resin may be polyurethane formed by reacting a diisocyanate monomer and a polyol, and the diisocyanate monomer may include an aromatic diisocyanate monomer and an aliphatic diisocyanate monomer.

A detailed description of the mixing ratio of the diisocyanate monomer and the like will be omitted by overlapping with the above-described bonding composition for the electrical steel sheet.

A laminate of one implementation of the present disclosure may include a plurality of electrical steel sheets; and fusion layers positioned between the plurality of electrical steel sheets, wherein the fusion layer may include an adhesive resin and a bonding additive, the adhesive resin may be polyurethane formed by reacting a diisocyanate monomer and a polyol, and the diisocyanate monomer may include an aromatic diisocyanate monomer and an aliphatic diisocyanate monomer.

A detailed description of the mixing ratio of the diisocyanate monomer and the like will be omitted by overlapping with the above-described bonding composition for the electrical steel sheet.

The thickness of the fusion layer of the electrical steel sheet laminate may be 0.1 to 10 µm. If the thickness of the fusion layer is too thin, the adhesion may rapidly decrease, and if the thickness of the fusion layer is too thick, problems due to sticky properties may occur after winding the coating. Specifically, the thickness of the fusion layer may be 2 to 7 µm. More specifically, the thickness of the fusion layer may be 5 to 7 µm.

A coupling agent, a wetting agent, a curing catalyst, a curing agent, and the like may remain in the fusion layer of the electrical steel sheet laminate.

A manufacturing method for an electrical steel sheet laminate according to one implementation of the present invention may include forming an adhesive coating layer by applying an adhesive coating composition to one surface or both surfaces of the electrical steel sheet and then curing the adhesive coating composition; and forming a fusion layer by laminating and thermal-fusing a plurality of electrical steel sheets having the adhesive coating layer thereon.

Hereinafter, each step will be described in detail.

First, the adhesive coating composition is prepared. Since the adhesive coating composition has been described above, the duplicate description will be omitted.

Next, the adhesive coating composition is coated on the surface of the electrical steel sheet and then cured to form an adhesive coating layer. This step may be performed in a temperature range of 150 to 250°C based on the sheet temperature for curing the adhesive coating composition.

The plurality of electrical steel sheets having the adhesive coating layers are laminated and thermal-fused to form a fusion layer 20. Through the thermal-fusing step, polymer components in the adhesive coating layer are thermal-fused to form the fusion layer.

In the thermal-fusing step, the thermal-fusing may be performed under pressing conditions of a temperature of 150 to 250°C, a pressure of 0.05 to 5.0 Mpa, and 0.1 to 120 minutes. Each of the conditions may be satisfied independently, and two or more conditions may be satisfied simultaneously. As such, by adjusting temperature, pressure, and time conditions in the thermal-fusing step, the adhesive coating layer may be densely thermal-fused between the electrical steel sheets without gaps or organic phases.

Hereinafter, preferable Examples of the present invention and Comparative Examples will be described. However, the following Examples are merely a preferred embodiment of the present invention, and the present invention is not limited to the following Examples.

### Example

A non-oriented electrical steel sheet (50 X 50 mm, 0.35 mmt) was prepared as a blank specimen. An adhesive coating solution was applied to the top and bottom of each prepared blank specimen using a bar coater or roll coater at a predetermined thickness, cured at 150 to 200°C based on the sheet temperature for 20 seconds, and then slowly cooled in air to form an adhesive coating layer.

As the adhesive coating solution, the isocyanate-containing monomers consisted of a total of two monomers, one aliphatic isocyanate monomer and one aromatic isocyanate monomer, and polyurethane obtained by reacting with a polyol at different ratios of the monomers were included. As the polyol, polypropylene glycol) (PPG) having a number molecular weight of 425 g/mol was used.

The composition of the adhesive coating solution other than the obtained polyurethane resin included 0.5 parts by weight of a silane coupling agent, 0.1 parts by weight of a silicone-based wetting agent, 1 parts by weight of a dicyandiamide-based curing agent and 0.5 parts by weight of an imidazole-based curing catalyst based on 100 parts by weight of the polyurethane resin.

The mixture of each used isocyanate monomer type and the content ratio of polyol were shown in Table 1 below, and the glass transition temperature, tensile strength, and elongation, which were physical properties of the adhesive coating solution containing the prepared polyurethane, were measured and shown in Table 1.

The isocyanate monomer content and the polyol content in Table 1 were prepared based on 100 wt% of polyurethane.

The electrical steel sheets coated with the adhesive coating layers were laminated to a height of 20 mm, and then thermal-fused at 160°C for 10 minutes by pressing with a force of 0.5 MPa. After thermal fusing, the thickness of the fusion layer was about 3 µm. The thermal-fused fusion products were evaluated for each type of solution. As evaluation items, peel adhesion (T-peel, N/mm) and ATF resistance were evaluated and shown in Table 1 below.

Each measurement method was as follows.

In order to measure the mechanical properties of a synthesized polyurethane polymer, the synthesized polyurethane polymer was poured onto release paper, applied and prepared to a uniform thickness using an applicator, and then dried in a vacuum oven at 100°C for 24 hours to prepare a dry film. The maximum tensile strength and elongation of the film were measured at a speed of 50 mm/min using a universal testing machine according to ASTM D-1708 standard.

A specimen specification for peel off (T-peel off) measurement was prepared in accordance with ISO 11339. Two specimens of 25 x 200 mm were bonded with an area of 25 x 150 mm², and then an unbonded area was bent at 90° to produce a T-shaped tensile specimen. The specimens manufactured by the peel off method (T-peel off) were fixed to upper/lower jigs with a constant force, and then pulled at a constant speed and measured using a device for measuring the tensile force of the laminated samples. At this time, in the case of shear strength, the measured value was measured at a point where an interface with the minimum adhesion was separated among the interfaces of the laminated samples. After maintaining the temperature of the specimen at 60°C through a heating device, the adhesion was measured.

Method for evaluating ATF resistance: When a drive motor was used in a vehicle, a lot of heat was generated during long-term rotation at a high speed, and an automotive transmission fluid (ATF, automotive transmission oil) was used to cool the heat. Accordingly, in order to secure adhesion reliability during long-term use, it is important to maintain the adhesion of laminated coils in a state impregnated with an ATF. Accordingly, the ATF resistance was evaluated. Shear adhesion was tested after immersing the prepared laminated coils in ATF at a temperature of 150°C for 500 hours.

The shear adhesion to measure the ATF resistance was measured by the shear strength. Specimen specifications for measuring the shear strength were prepared in accordance with ISO 4587. Two specimens of 25 x 100 mm were bonded with an area of 12.5 x 25 mm² and thermal-fused under the conditions to prepare a shear strength specimen.

The specimens manufactured by the shear strength were fixed to upper/lower jigs with a constant force, and then pulled at a constant speed and measured using a device for measuring the tensile force of the laminated samples. At this time, in the case of the shear strength, the measured value was measured at a point where an interface with the minimum adhesion was separated among the interfaces of the laminated samples.

**(Table 1)**

| | Isocyanate type | | Polyol | | Mechanical properties of adhesive | | | T-Peel (1.5 N/mm or more) | ATF resistan ce (shear adheren ce > 1 MPa) |
|---|---|---|---|---|---|---|---|---|---|
| | 2,4'-MDLHD I (weight ratio) | Conten t (wt%) | Type | Conte nt (wt%) | Tg (°C) | Tensile strength (MPa) | Elongatio n (%) | | |
| Exampl e 1 | 80:20 | 38 | PPG | 62 | - 30 | 70 | 400 | 2.0 | 2.5 |
| Exampl e2 | 60:40 | 36 | PPG | 64 | -50 | 60 | 500 | 2.4 | 1.5 |
| Compar ative Exampl e 1 | 40:60 | 34 | PPG | 66 | - 70 | 40 | 800 | 3.1 | 0.5 |
| Compar ative Exampl e2 | 100:0 | 40 | PPG | 60 | -10 | 120 | 100 | 2 | 1.5 |

As the result of Table 1 above, it was confirmed that in the case of Examples 1 and 2 in which the mixing weight ratio of MDI as an aromatic isocyanate monomer, and HDI as an aliphatic isocyanate monomer, was appropriately controlled, both the tensile strength and elongation were controlled within an appropriate range, the peel strength (T-peel) was excellent at 1.5 N/mm or more, and the ATF resistance was also excellent. On the other hand, in the case of Comparative Example 1 containing a lot of HDI, it was confirmed that the elongation was excellent, but the tensile strength was low, and the ATF resistance was also deteriorated. In addition, in the case of Comparative Example 2 using only 2.4'-MDI, it was confirmed that the tensile strength was excellent, but the elongation was inferior, and the peel strength was also deteriorated.

The present invention can be manufactured in various different forms, not limited to the embodiments, and it will be appreciated to those skilled in the art that the present invention may be implemented in other specific forms without changing the technical idea or essential features of the present invention. Therefore, it should be appreciated that the exemplary embodiments described above are illustrative in all aspects and are not restricted.

## Claims

1. A bonding composition for an electrical steel sheet comprising:
an adhesive resin and a bonding additive,
wherein the adhesive resin is polyurethane formed by reacting a diisocyanate monomer and a polyol, and
the diisocyanate monomer includes an aromatic diisocyanate monomer and an aliphatic diisocyanate monomer.

2. The bonding composition for the electrical steel sheet of claim 1, wherein:
the diisocyanate monomer includes 50 parts by weight or less of the aliphatic diisocyanate monomer based on 100 parts by weight of the total diisocyanate monomer.

3. The bonding composition for the electrical steel sheet of claim 1, wherein:
the aromatic diisocyanate monomer is a monomer represented by Chemical Formula 1, Chemical Formula 2, or a combination thereof. 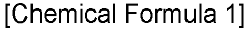 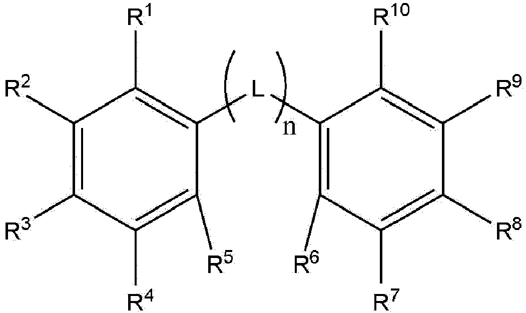 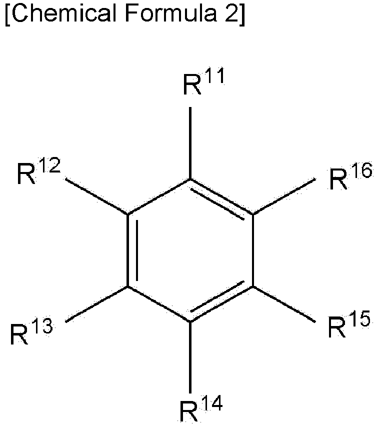 In Chemical Formula 1,
R' to R¹⁰ are each independently hydrogen, heavy hydrogen, a substituted or unsubstituted C1 to C10 alkyl group, a substituted or unsubstituted C6 to C20 aryl group, a substituted or unsubstituted C5 to C20 heteroaryl group, or an isocyanate group,
any one of R' to R⁵ is isocyanate, and any one of R⁶ to R¹⁰ is isocyanate,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group,
n is any one integer of 1 to 10, and
in Chemical Formula 2,
R¹¹ to R¹⁶ are each independently hydrogen, heavy hydrogen, a substituted or unsubstituted C1 to C10 alkyl group, a substituted or unsubstituted C6 to C20 aryl group, a substituted or unsubstituted C5 to C20 heteroaryl group, an isocyanate group, or a substituted or unsubstituted C1 to C10 alkyl isocyanate group, and
at least two of R¹¹ to R¹⁶ are isocyanates or substituted or unsubstituted C1 to C10 alkyl isocyanates.

4. The bonding composition for the electrical steel sheet of claim 1, wherein:
the aliphatic diisocyanate monomer is a monomer represented by Chemical Formula 3 below.
[Chemical Formula 3] O=C=N-R-N=C=O
In Chemical Formula 3,
R is a substituted or unsubstituted C1 to C10 alkyl group or a substituted or unsubstituted C3 to C12 cycloalkyl group.

5. The bonding composition for the electrical steel sheet of claim 1, wherein:
the aromatic diisocyanate monomer is at least one selected from the group consisting of 2,4-toluene diisocyanate, 2,6-toluene diisocyanate, p-phenylene diisocyanate, 2,2'-methylene diphenyl diisocyanate, 2,4'-methylene diphenyl diisocyanate, 4,4'-methylene diphenyl diisocyanate and m-xylene diisocyanate.

6. The bonding composition for the electrical steel sheet of claim 1, wherein:
the aliphatic diisocyanate monomer is at least one selected from the group consisting of hexamethylene diisocyanate (HDI), 1,4-cyclohexane diisocyanate, 4,4'-dicyclohexylmethane diisocyanate, isophorone diisocyanate and hydrogenated xylene diisocyanate.

7. The bonding composition for the electrical steel sheet of claim 1, wherein:
the bonding composition for the electrical steel sheet has a glass transition temperature (Tg) of greater than - 70°C to less than - 10°C, tensile strength of greater than 40 MPa to less than 120 MPa, and elongation of greater than 100% to less than 800%.

8. An electrical steel sheet comprising:
an electrical steel sheet substrate; and
a bonding coating layer positioned on the electrical steel sheet substrate,
wherein the bonding coating layer includes an adhesive resin and a bonding additive,
the adhesive resin is polyurethane formed by reacting a diisocyanate monomer and a polyol, and
the diisocyanate monomer includes an aromatic diisocyanate monomer and an aliphatic diisocyanate monomer.

9. An electrical steel sheet laminate comprising:
a plurality of electrical steel sheets; and
fusion layers positioned between the plurality of electrical steel sheets,
wherein the fusion layer includes an adhesive resin and a bonding additive,
the adhesive resin is polyurethane formed by reacting a diisocyanate monomer and a polyol, and
the diisocyanate monomer includes an aromatic diisocyanate monomer and an aliphatic diisocyanate monomer.
